# EUROPÄISCHE PATENTANMELDUNG

(11) **EP 3 098 469 A1**
(43) Veröffentlichungstag der Anmeldung: **30.11.2016**
(21) Anmeldenummer: 16000981.7
(22) Anmeldetag: 02.05.2016
(51) Int. Cl.: F16D 3/68, F16D 3/74, F16D 11/14

(54) **ELASTISCHE KLAUENKUPPLUNG**

(30) Priorität: 27.05.2015 DE 102015108322
(71) Anmelder: Centa-Antriebe Kirschey GmbH, 42781 Haan (DE)
(72) Erfinder: Exner, Jochen, 53773 Hennef (DE); Fitsch, Martin, 42115 Wuppertal (DE)
(74) Vertreter: Roche, von Westernhagen & Ehresmann

(57) **Zusammenfassung**

Die Erfindung betrifft unter anderem eine elastische Klauenkupplung (10) zur Übertragung von Drehmomenten von einem Antrieb (12) zu einem Abtrieb (13), mit einem ersten, dem Antrieb zugeordneten Kupplungsteil (14), und einem zweiten, dem Abtrieb zugeordneten Kupplungsteil (15), die beide um eine gemeinsame Drehachse (13) rotieren, wobei an beiden Kupplungsteilen radial montierbare Klauen (18, 19) angeordnet sind, die sich von dem jeweiligen Kupplungsteil radial nach außen und in Axialrichtung im Sinne einer Erzielung einer axialen Überdeckung mit dem jeweils anderen Kupplungsteil erstrecken, wobei jeweils zwei in Umfangsrichtung um die Drehachse benachbart angeordnete Klauen (19a, 18a) zwischen sich einen Unterbringungsraum (32a) für einen elastischen Körper (25, 26) ausbilden. Die Besonderheit besteht unter anderem darin, dass die Klauen beider Kupplungsteile identisch ausgebildet sind.

## Beschreibung

Die Erfindung betrifft eine elastische Klauenkupplung nach dem Oberbegriff des Anspruches 1.

Eine derartige Klauenkupplung ist beispielsweise aus der DE 10 2013 004 583 A1 der Anmelderin bekannt.

Die dort beschriebene Kupplung hat sich im Einsatz bewährt. Die Fertigung der dort beschriebenen Kupplung ist jedoch aufwändig.

Ausgehend von dem eingangs beschriebenen Stand der Technik besteht die Aufgabe der Erfindung darin, eine elastische Wellenkupplung nach dem Oberbegriff des Anspruches 1 derartig weiterzubilden, dass sie eine vereinfachte Bauweise ermöglicht.

Die Erfindung löst diese Aufgabe mit den Merkmalen des Anspruches 1.

Das Prinzip der Erfindung besteht im Wesentlichen darin, bei einer elastischen Klauenkupplung die auf den beiden Kupplungsteilen anzuordnenden Klauen identisch auszugestalten. Hierdurch kann die Zahl der Gleichteile erhöht werden, wodurch Fertigungskosten und Lagerhaltungsaufwand reduziert werden können. Damit wird bei Beibehaltung der an sich im hohen Maße zufriedenstellenden Kupplungseigenschaften eine vereinfachte Bauweise möglich.

Die Erfindung betrifft eine elastische Klauenkupplung mit der Drehmomente, insbesondere sehr hohe Drehmomente, von einem Antrieb zu einem Abtrieb übertragen werden. Die Klauenkupplung umfasst hierzu ein erstes Kupplungsteil und ein zweites Kupplungsteil. Das erste Kupplungsteil ist dem Antrieb zugeordnet, und insbesondere an dem Antrieb befestigt. Beispielsweise kann das Kupplungsteil an dem Schwungrad eines Motors befestigt sein.

Das zweite Kupplungsteil ist dem Abtrieb zugeordnet, insbesondere an dem Abtrieb befestigt. Insbesondere kann das Kupplungsteil an einer Abtriebswelle festgelegt sein.

Das erste Kupplungsteil und das zweite Kupplungsteil rotieren um eine gemeinsame Drehachse. Insbesondere sind beide Kupplungsteile von einem kreiszylindrischen Ringkörper ausgebildet, welcher eine gleiche oder gleich ausgestaltete Außenumfangsfläche, insbesondere einen gleichen Außendurchmesser, und, weiter insbesondere, eine gleich ausgestaltete Innenumfangsfläche aufweisen kann.

Bei der erfindungsgemäßen Klauenkupplung sind radial montierbare Klauen an beiden Kupplungsteilen angeordnet. Die Klauen sind also in Radialrichtung unter Zuhilfenahme von Schraubelementen befestigbar und in Radialrichtung lösbar.

Die Klauen erstrecken sich von dem jeweiligen Kupplungsteil, an dem sie befestigt sind, radial nach außen. Jede Klaue erstreckt sich darüber hinaus in Axialrichtung von dem Kupplungsteil, an dem sie festgelegt ist, hin zu dem anderen Kupplungsteil. Diese Erstreckung in Axialrichtung ist dabei derartig getroffen, dass die Klaue in axiale Überdeckung mit dem jeweils anderen Kupplungsteil gerät.

Anders ausgedrückt, sind an einem ersten Kupplungsteil Klauen erster Art angeordnet, und an dem anderen Kupplungsteil Klauen zweiter Art. Die Klauen erster Art greifen in die zwischen den Klauen zweiter Art angeordneten Zwischenräume ein, so dass eine Art sternartige Verzahnung eintritt. Man spricht in diesem Zusammenhang auch von einer Sternkupplung.

Die Zahl der Klauen, die an dem ersten Kupplungsteil angeordnet ist, entspricht der Zahl der Klauen, die in dem zweiten Kupplungsteil angeordnet ist.

Bezogen auf die Umfangsrichtung ist eine alternierende Anordnung von Klauen erster Art, die an dem ersten Kupplungsteil angeordnet sind, und Klauen zweiter Art, die an dem zweiten Kupplungsteil angeordnet ist, getroffen.

Zwischen jeweils zwei in Umfangsrichtung um die Drehachse benachbart angeordneten Klauen befindet sich ein Unterbringungsraum für einen elastischen Körper. Vorzugsweise ist die Zahl der elastischen Körper genau so groß wie die Zahl der Klauen insgesamt.

Die elastischen Körper sind vorzugweise als gummielastische Rollenkörper ausgebildet, oder umfassen solche elastischen Rollenkörper. Man spricht insoweit bei dieser Art von Klauenkupplung auch von einer Rollenkupplung.

Es handelt sich bei der erfindungsgemäßen Kupplung um eine elastische Klauenkupplung, die einer drehelastischen Drehmomentübermittlung dient. Die elastischen Körper dienen zur Schwingungsdämpfung und schützen beispielsweise ein abtriebsseitig angeordnetes Getriebe vor Drehmomentspitzen, die im Antrieb auftreten können.

Gemäß der Erfindung ist vorgesehen, dass die Klauen beider Kupplungsteile identisch ausgebildet sind. Das bedeutet, dass in Umfangsrichtung jeweils zwei benachbarte Klauen, also eine erste Klaue erster Art, die auf dem ersten Kupplungsteil montiert ist, und eine zweite Klaue zweiter Art, die auf dem zweiten Kupplungsteil montiert ist, identisch oder im Wesentlichen identisch ausgebildet sind. Dies ermöglicht eine spiegelsymmetrische Montage.

Die im Stand der Technik vorgesehene unterschiedliche Geometrie der Klauen erster Art und der Klauen zweiter Art wird gemäß der Erfindung obsolet. Die Erfindung erkennt, dass die Klauen beider Kupplungsteile identisch ausgebildet werden können, und schlägt dies vor, um eine Vielzahl von Gleichteilen zu ermöglichen.

Die Erfindung löst die oben beschriebene Aufgabe gemäß einem zweiten Aspekt, mit den Merkmalen des Anspruches 2.

Demnach ist vorgesehen, dass die Klauen jeweils in mindestens zwei Klauensegmente unterteilt sind, wobei die Klauen beider Kupplungsteile wenigstens ein identisch ausgebildetes Klauensegment aufweisen. Gemäß diesem Aspekt der Erfindung kann jede Klaue beispielsweise aus zwei lösbar aneinander befestigbaren oder relativ zueinander befestigbaren Klauensegmenten, insbesondere einem Fußsegment und einem Kopfsegment, bestehen. Das Fußsegment und das Kopfsegment können die Klaue insbesondere in Radialrichtung teilen. Das Fußsegment kann z. B. unmittelbar an dem Kupplungsteil festgelegt werden und das Kopfsegment kann z. B. nach Festlegung des Fußsegmentes an dem Kupplungsteil unmittelbar an dem Fußsegment festgelegt werden. Es besteht auch die Möglichkeit, dass das Kopfsegment nach Montage des Fußsegmentes an dem Kupplungsteil ebenfalls an dem Kupplungsteil unmittelbar festgelegt wird.

Schließlich ist von der Erfindung umfasst, wenn Kopfsegment und Fußsegment zunächst aneinander befestigt werden, insbesondere eine Handhabungseinheit bilden, und sodann diese Handhabungseinheit aus Kopfsegment und Fußsegment gemeinsam an dem Kupplungsteil befestigt wird.

Von der Erfindung ist auch umfasst, wenn jeweils nur das Kopfsegment unterschiedlicher Klauen an unterschiedlichen Kupplungsteilen, also das Kopfsegment einer Klaue erster Art, die an dem ersten Kupplungsteil befestigt wird, und das Kopfsegment einer Klaue zweiter Art, die an dem zweiten Kupplungsteil befestigt wird, identisch ausgebildet ist.

Von der Erfindung ist aber auch eine Klauenankupplung umfasst, bei der das Fußsegment einer Klaue erster Art, die an dem ersten Kupplungsteil befestigt wird, und ein Fußsegment einer Klaue zweiter Art, die an dem zweiten Kupplungsteil befestigt wird, identisch ausgebildet ist.

Soweit Kopfsegment und Fußsegment unterschiedlicher Klauen beider Kupplungsteile identisch ausgebildet sind, handelt es sich hier wiederum um Klauen beider Kupplungsteile im Sinne des Anspruches 1, die identisch ausgebildet sind, mit der Besonderheit, dass hier eine Unterteilung in unterschiedliche Kupplungssegmente vorgesehen ist.

Gemäß diesem Aspekt der Erfindung kann eine Klaue in zwei, aber auch in mehr als zwei Klauensegmente unterteilt sein.

Gemäß einer vorteilhaften Ausgestaltung der Erfindung stellen das Kopfsegment der Klaue und das Fußsegment der Klaue jeweils einen Abschnitt einer Anlagefläche für den elastischen Körper bereit. Hierdurch wird eine besonders vorteilhafte Geometrie möglich. Insbesondere wird hierdurch eine Montage einer elastischen Klauenkupplung möglich, bei der zunächst eines oder mehrere Fußsegmente an einem Kupplungsteil oder an den beiden Kupplungsteilen montiert werden, sodann die elastischen Körper in Radialrichtung eingesetzt werden, und schließlich das zugehörige oder die zugehörigen Kopfsegmente in Radialrichtung festgelegt werden. Dies ermöglicht zugleich - bei umgekehrter Montagereichenfolge - einen einfachen Austausch von elastischen Körpern, beispielsweise zu Reparatur- oder zu Wartungszwecken.

Gemäß einer weiteren vorteilhaften Ausgestaltung der Erfindung sind Fußsegment und Kopfsegment aneinander radial montierbar ausgebildet. Dies ermöglicht eine besonders einfache Befestigung und Demontage der Klauen, bzw. der Klauensegmente.

Gemäß einer weiteren vorteilhaften Ausgestaltung der Erfindung bestehen Fußsegment und Kopfsegment aus unterschiedlichen Materialien. Dies ermöglicht eine optimierte Materialwahl für die unterschiedlichen Segmente, und damit für die unterschiedlichen Funktionsabschnitte einer Klaue, sowie die Erzielung geringer Herstellungskosten.

Gemäß einer weiteren vorteilhaften Ausgestaltung der Erfindung ist das Kopfsegment einer Klaue, bezogen auf eine Mittellängsachse der Klaue, asymmetrisch ausgebildet. Dies bietet die Möglichkeit, auf unterschiedlichen Seiten einer Klaue unterschiedlich ausgebildete, elastische Körper anzuordnen, bzw. unterschiedliche Geometrien und/oder unterschiedlich geformte Anlageflächen für die elastischen Körper vorzusehen, und beispielsweise Halte- oder Befestigungsabschnitte für elastische Körper zweiter Art vorzusehen.

Gemäß einer weiteren vorteilhaften Ausgestaltung der Erfindung ist in Umfangsrichtung eine alternierende Ausrichtung der Kopfsegmente getroffen. Hierdurch besteht die Möglichkeit, in Umfangsrichtung jeweils abwechselnd unterschiedliche Arten elastischer Körper unterzubringen.

Gemäß einer weiteren vorteilhaften Ausgestaltung der Erfindung weist das Fußsegment eine konkave, zylindrisch gewölbte Montagefläche zur Kontaktierung einer zylindrisch ausgebildeten Mantelfläche des Kupplungsteils auf. Das Fußsegment kann insoweit in eine satte Anlage, an die aufgrund des Außendurchmessers vorgegebenen zylindrischen Mantelfläche des vorteilhafterweise ringkörperförmig ausgebildeten Kupplungsteils zur Anlage gebracht werden.

Gemäß einer weiteren vorteilhaften Ausgestaltung der Erfindung sind beide Kupplungsteile jeweils von einem Ringkörper bereitgestellt, der radiale Schraubaufnahmen zur Klauenbefestigung aufweist. Die Bereitstellung eines Ringkörpers des Kupplungsteils ermöglicht insbesondere eine besonders einfache Fertigung des Trägerelementes für die Klauen. Der Ringkörper kann aber auch auf besonders geschickte Weise eine Welle-Welle- sowie eine Welle-Flanschkupplung bereitstellen. Beispielsweise kann der Ringkörper innenseitig von einer Welle durchgriffen werden. Hier bieten sich besonders vorteilhafte einfache Befestigungsarten zur Befestigung des ersten Kupplungsteils und des zweiten Kupplungsteils an der jeweiligen Welle.

Gemäß einer weiteren vorteilhaften Ausgestaltung der Erfindung weist wenigstens ein Kupplungsteil zusätzlich zu den radialen Schraubaufnahmen auch noch axiale Schraubaufnahmen auf. Diese dienen z. B. der Montage eines Befestigungsflansches. Der Befestigungsflansch weist dabei insbesondere eine Radialabmessung auf, die die Radialabmessung des Ringkörpers übersteigt, insbesondere deutlich übersteigt.

Damit wird die Bereitstellung einer Welle-Flanschverbindung ermöglicht, die an beiden Kupplungsteilen eine radiale Befestigung von Klauen zulässt. Das zweite, als Ringkörper ausgebildete Kupplungsteil, welches zusätzlich axiale Schraubaufnahmen aufweist, ist insoweit als eine Art Adapter oder Montagehilfsring vorgesehen.

Die Erfindung betrifft darüber hinaus eine Gruppe von Fußsegmenten von Klauen für elastische Wellenkupplungen gemäß Anspruch 12.

Gemäß diesem Aspekt der Erfindung wird die oben beschriebene Aufgabe durch die Merkmale des Anspruches 12 gelöst.

Demnach ist vorgesehen, dass ein erstes Fußsegment eine konkave, entlang einem ersten Radius zylindrisch gewölbte Montagefläche zur Kontaktierung einer zylindrisch ausgebildeten Mantelfläche des Kupplungsteils aufweist, und dass ein zweites Fußsegment zu dem ersten Fußsegment bis auf die Ausgestaltung der Montagefläche identisch ausgebildet ist, und eine konkave, entlang einem zweiten, von dem ersten Radius unterschiedlichen Radius zylindrisch gewölbte Montagefläche zur Kontaktierung einer entlang dem zweiten Radius zylindrisch ausgebildeten Mantelfläche des Kupplungsteils aufweist.

Das Prinzip der Erfindung besteht darin, dass in Anpassungen an die Wölbung der Außenmantelfläche des Kupplungsteils unterschiedliche Fußsegmente unterschiedliche Montageflächen aufweisen.

Bei unterschiedlichen Nabengrößen kann insoweit durch die Änderung der Zahl der Klauenelemente - bei lediglich erforderlicher Anpassung der konkaven Wölbung der Montagefläche an dem Fußsegment der Klaue - für eine hohe Zahl von Gleichteilen gesorgt werden. Insbesondere kann in Folge einer zweiteiligen Ausbildung der Klaue mit Fußsegment und Kopfsegment auf identische Kopfsegmente für unterschiedliche Nabengrößen zurückgegriffen werden. Auch kann die Bereitstellung der konkaven Montagefläche an dem Fußsegment z. B. durch einen Schmiedevorgang auf denkbar einfache Weise erreicht werden.

Weitere Vorteile der Erfindung ergeben sich aus den nicht zitierten Unteransprüchen, und anhand der nachfolgenden Beschreibung der in den Zeichnungen dargestellten Ausführungsbeispiele. In den Figuren zeigen:
- Figur 1: in einer schematischen, perspektivischen Ansicht ein erstes Ausführungsbeispiel einer erfindungsgemäßen Kupplung,
- Figur 1a: das Ausführungsbeispiel der Fig. 1, wobei zusätzlich antriebsseitig ein Flansch dargestellt ist, und wobei zum Zwecke der Illustration ein etwa 75 Winkelgrad umfassendes Umfangssegment der Kupplung von Klauen freigehalten ist, in einer teilgeschnittenen, schematischen, perspektivischen Ansicht,
- Fig. 2: die Kupplung der Fig. 1 in einer schematischen Ansicht gemäß Ansichtspfeil II in Fig. 1,
- Fig. 3: in einer teilgeschnittenen, schematischen Ansicht eine Teilschnittdarstellung durch die Kupplung der Fig. 2, etwa entlang Schnittlinie III-III in Fig. 2,
- Fig. 4: eine schematische, teilgeschnittene Ansicht durch die Kupplung der Fig. 2, etwa entlang Schnittlinie IV-IV in Fig. 2,
- Fig. 5: in einer Darstellung gemäß Fig. 4 eine teilgeschnittene Ansicht der Vorrichtung der Fig. 2, etwa entlang Schnittlinie V-V in Fig. 2,
- Fig. 6: eine vergrößerte, teilgeschnittene, schematische Ansichtsdarstellung eines Bereiches der Kupplung der Fig. 2, etwa entlang Teilkreis VI in Fig. 2, wobei die schematische Schnittdarstellung der Fig. 6 einer Schnittebene entspricht, die in Blickrichtung des Betrachters der Fig. 2 hinter der Papierebene liegt,
- Fig. 7: in einer teilgeschnittenen, schematischen Ansicht eine Stirnansicht eines Kopfsegmentes einer Klaue,
- Fig. 8: in einer schematischen, perspektivischen Ansicht die Klaue der Fig. 7, etwa gemäß Ansichtspfeil VIII in Fig. 7,
- Fig. 9: eine schematische Stirnansicht eines Fußsegmentes einer Klaue in Einzeldarstellung,
- Fig. 10: eine Schnittdarstellung durch die Klaue der Fig. 9, etwa entlang Schnittlinie X-X in Fig. 9,
- Fig. 11: eine schematische, perspektivische Ansicht der Klaue der Fig. 9, etwa gemäß Ansichtspfeil XI in Fig. 9,
- Fig. 12: eine Rückansicht der Klaue der Fig. 11, etwa entlang Ansichtspfeil XII in Fig. 11,
- Fig. 13: in Einzeldarstellung in perspektivischer Ansicht ein zweites Kupplungsteil mit radialen Schraubaufnahmen,
- Fig. 14: ein Ausführungsbeispiel eines ersten Kupplungsteils in einer Darstellung gemäß Fig. 13 mit zusätzlich zu den radialen Schraubaufnahmen vorgesehenen, axialen Schraubaufnahmen,
- Fig. 15: in einer Einzeldarstellung in perspektivischer Ansicht ein Befestigungsflansch zur Befestigung an dem Antrieb, z. B. an dem Schwungrad eines Motors, sowie zur axialen Befestigung an den in Fig. 14 dargestellten axialen Schraubaufnahmen des ersten Kupplungsteils,
- Fig. 16: in einer perspektivischen Ansicht einen elastischen Körper zweiter Art, und
- Fig. 17: eine Stirnansicht des elastischen Körpers zweiter Art der Fig. 16, etwa entlang Ansichtspfeil XVII in Fig. 16.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

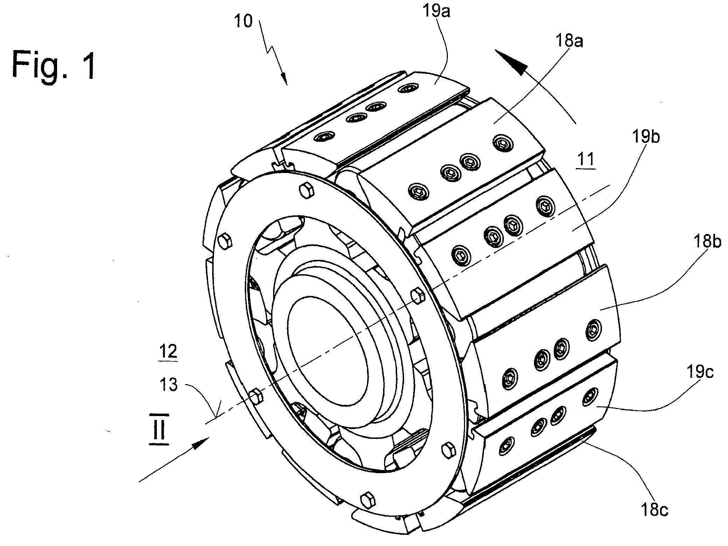

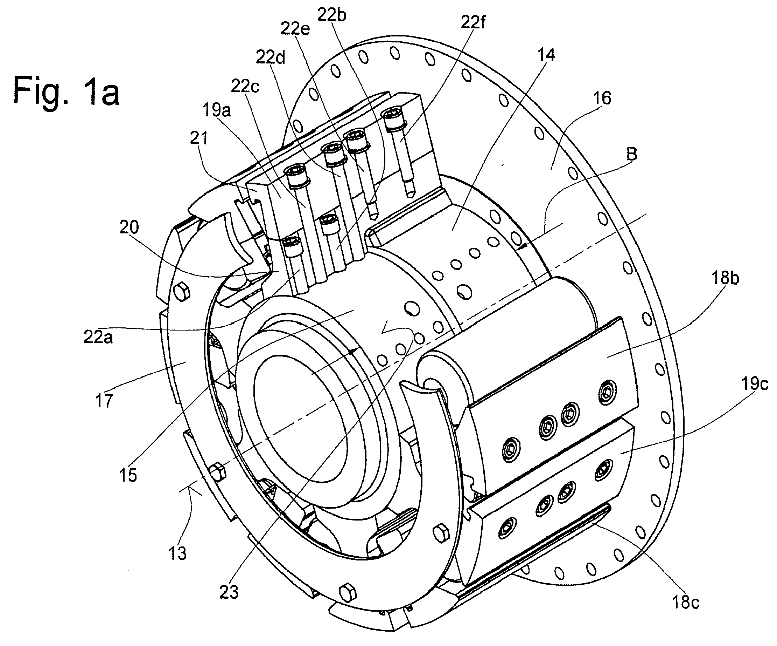

Die in ihrer Gesamtheit in den Figuren mit 10 bezeichnete Klauenkupplung soll zunächst anhand der Ausführungsbeispiele der Figuren 1 und 1 a erläutert werden.

Ausweislich Fig. 1 dient die elastische Klauenkupplung 10 der Übertragung von Drehmomenten um eine mit 13 bezeichnete geometrische Achse von einem etwa bei 11 befindlichen, nicht dargestellten Antrieb zu einem etwa bei 12 befindlichen, nicht dargestellten Abtrieb.

Der Antrieb 11 kann beispielsweise ein Verbrennungsmotor oder ein Elektromotor sein.

Der Abtrieb 12 kann beispielsweise von einem Getriebe gebildet sein, das mit der Kupplung 10 über eine nicht dargestellte Abtriebswelle verbunden ist.

Die Kupplung 10 kann nach Art einer Welle-Welle- oder nach Art einer Welle-Flansch- oder auch nach Art einer Flansch-Flansch-Verbindung ausgebildet sein, worauf später noch eingegangen wird.

Wie sich vielleicht am besten aus der abgebrochenen, perspektivischen Darstellung der Fig. 1a ergibt, umfasst die Kupplung 10 ein erstes Kupplungsteil 14 und ein zweites Kupplungsteil 15. Beide Kupplungsteile 14, 15 sind nach Art von kreiszylindrischen Ringkörpern ausgebildet. Sie weisen vorzugsweise den gleichen Innendurchmesser und den gleichen Außendurchmesser und eine gleiche axiale Erstreckung auf.

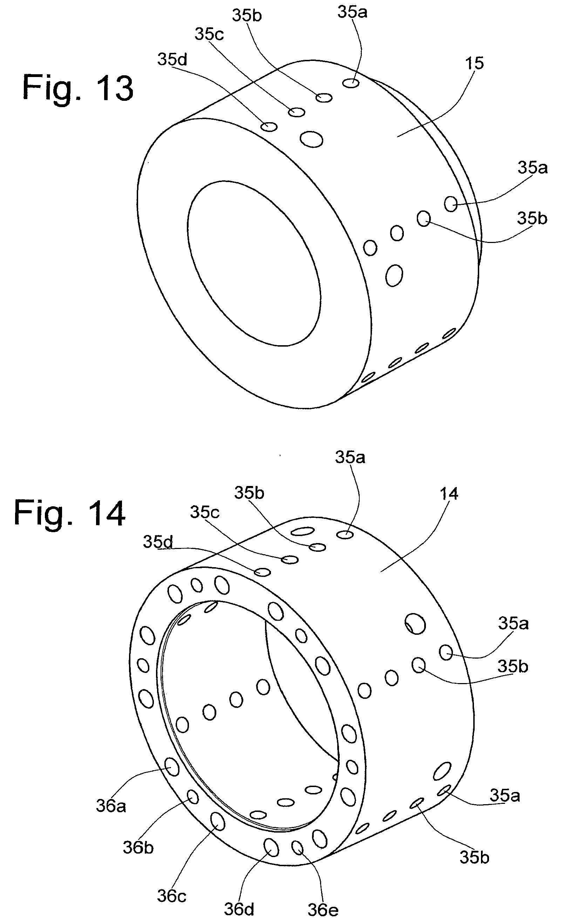

Wie insbesondere aus den Figuren 13 und 14 ersichtlich, sind auf der Außenmantelfläche der beiden Kupplungsteile 14, 15 eine Vielzahl von radialen Schraubenaufnahmen 35a, 35b, 35c, 35d, 35e vorgesehen, die lediglich beispielhaft und teilweise bezeichnet sind.

Diese Schraubenaufnahmen ermöglichen ein radiales Befestigen von Klauen 18, 19.

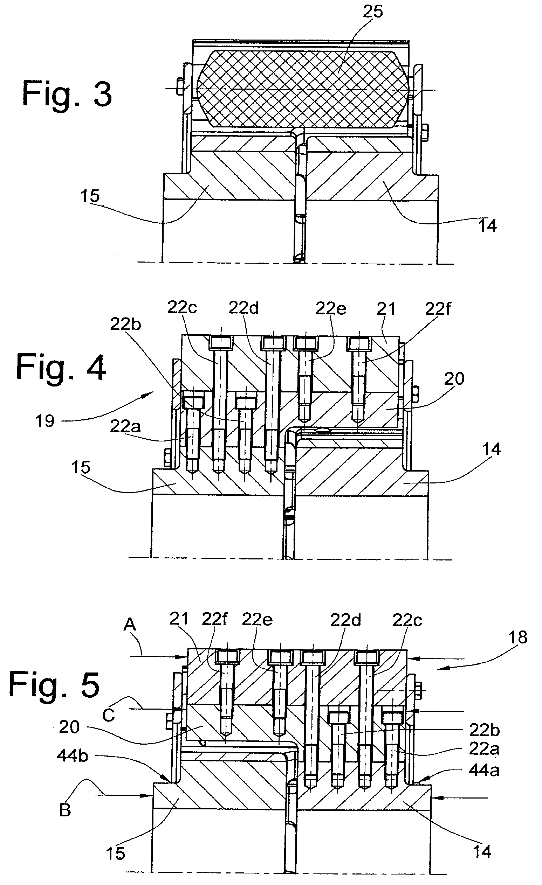

Während das Ausführungsbeispiel der Fig. 1 als Beispiel für eine Kupplung 10 der Art einer Welle-Welle-Verbindung steht, wird dem Betrachter der Fig. 1 a deutlich, dass die Kupplung 10 auch als Welle-Flansch-Verbindung ausgestaltet sein kann. Der Flansch ist in Fig. 1 a mit 16 bezeichnet, und in Fig. 5 in Einzeldarstellung illustriert.

Das erste Kupplungsteil 14 gemäß Fig. 14 verfügt zusätzlich zu den radialen Schraubaufnahmen 35a, 35b, 35c, 35d, 35e auch noch über axiale Schraubaufnahmen 36a, 36b, 36c, 36d, 36e, die ebenfalls nur teilweise bezeichnet sind.

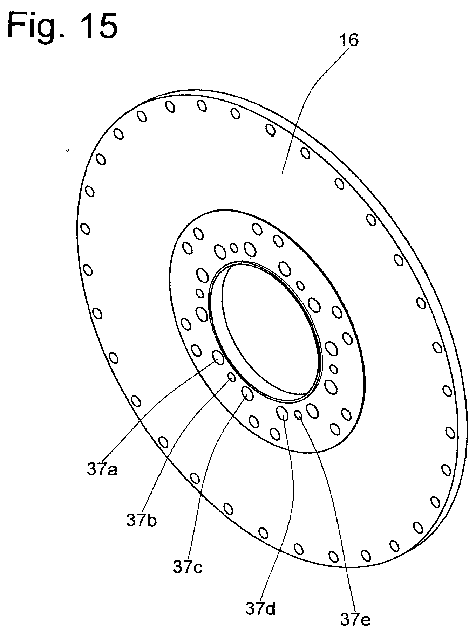

Diese korrespondieren mit Axialbohrungen 37a, 37b, 37c, 37d, 37e des Befestigungsflansches 16 gemäß Fig. 15.

Unabhängig davon, ob die Kupplung 10 insoweit als Welle-Welle-Verbindung oder als Welle-Flansch-Verbindung ausgestaltet werden soll, können die Klauen 18, 19 immer radial an den Kupplungsteilen 14, 15 festgelegt werden.

Lediglich der Vollständigkeit halber sei angemerkt, dass die Kupplungsteile 14, 15 - was nicht dargestellt ist - entweder einstückig in eine Welle übergehen können, oder innenseitig, beispielsweise durch eine Schraubbefestigung oder eine Passung, also eine Passbefestigung, drehfest mit einer Welle verbunden sein können.

Gemäß Fig. 1 a wird deutlich, dass die dort mit 19a bezeichnete Klaue - eine Klaue zweiter Art - über vier Schrauben 22a, 22b, 22c, 22d fest mit dem zweiten Kupplungsteil 15 verschraubt ist. Die Klaue 19a ist also drehfest mit dem zweiten Kupplungsteil 15 verbunden.

Die in Umfangsrichtung benachbarte, bezogen auf Fig. 1 rechts der Klaue 19a angeordnete Klaue 18a ist - was Fig. 1 nicht deutlich macht - auf analoge Weise fest mit dem ersten Kupplungsteil 14 verschraubt, und wird daher auch als Klaue erster Art bezeichnet.

Bezogen auf die Umfangsrichtung ist in alternierender Reihenfolge jeweils eine Klaue 19 mit dem zweiten Kupplungsteil 15 verschraubt, und eine benachbart angeordnete Klaue 18 mit dem ersten Kupplungsteil 14 verschraubt.

Die mit dem ersten Kupplungsteil 14 drehfest verbundene Klauen werden als Klauen erster Art 18, und die mit dem zweiten Kupplungsteil 15 drehfest verbundenen Klauen werden als Klauen zweiter Art 19 bezeichnet.

Bereits die teilgeschnittene Darstellung in Fig. 1a lässt erkennen, dass die dort mit 19a bezeichnete Klaue aus zwei Teilen, nämlich einem Fußsegment 20 und einem Kopfsegment 21 besteht.

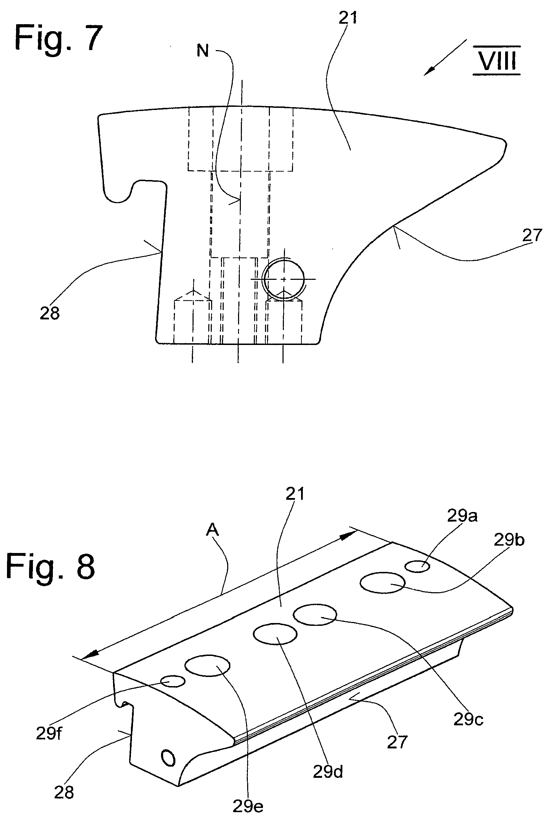

Das Kopfsegment 21 ist in den Figuren 7 und 8 in Einzeldarstellung gezeigt. Bei Betrachtung der Stirnansicht gemäß Fig. 7 wird dem Betrachter deutlich, dass das Kopfsegment 21 zwei gänzlich unterschiedlich ausgebildete Flanken 27 und 28 aufweist. Die axiale Länge A (Fig. 8) des Kopfsegmentes 21 entspricht im Wesentlichen der Summe B (Fig. 5) der axialen Längen der beiden Kupplungsteile 14 und 15 gemäß Fig. 1a, bzw. ist geringfügig kürzer.

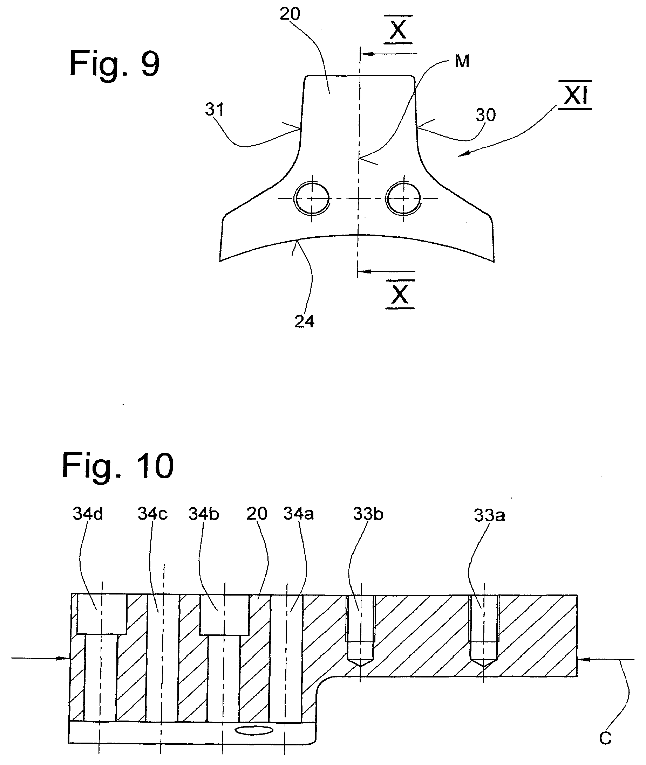

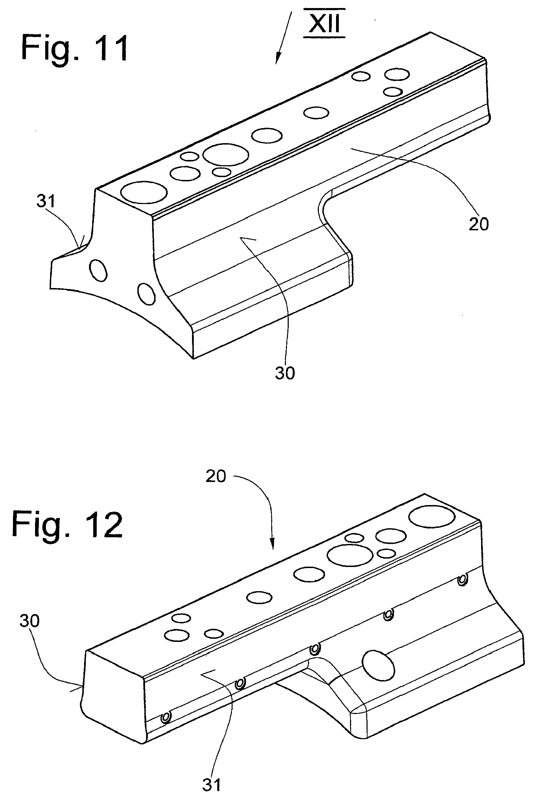

Das Fußsegment einer Klaue 18, 19 ist in den Figuren 9 bis 12 in Einzeldarstellung dargestellt. Hier erkennt man, dass die axiale Länge C der axialen Länge A des Kopfabschnittes 20 entspricht.

Insbesondere bei Betrachtung der Figuren 4 und 5 erkennt man, dass die axiale Länge A des Kopfsegmentes 21, bzw. die axiale Länge C des Fußsegmentes 20, geringfügig kürzer sind, als die Summe B der axialen Längen des ersten Kupplungsteils 14 und des zweiten Kupplungsteils 15.

Bei Betrachtung der Figuren 4 und 5 wird diesbezüglich deutlich, dass an dem ersten Kupplungsteil 14 eine erste Schulter 44a und an dem zweiten Kupplungsteil 15 eine zweite Schulter 44b angeordnet ist, wobei die Kopfsegmente 21 und die Fußsegmente 20 etwa bündig mit dem Ansatz der Schultern 44a, 44b abschließen.

Bei anderen Ausführungsbeispielen der Erfindung ist allerdings nicht erforderlich, dass an dem ersten und an dem zweiten Kupplungsteil 14, 15 entsprechende Schultern 44a, 44b angeordnet sind.

Der Fußabschnitt 20 ist gemäß einer Mittellängsebene M im Wesentlichen symmetrisch ausgebildet, so dass die beiden Seitenflanken 30, 31 identisch ausgebildet sind. Bei anderen Ausführungsbeispielen der Erfindung sind die beiden Flanken 30, 31 unterschiedlich ausgebildet.

Bezüglich der Mittellängsebene N des Kopfsegmentes 21 ist ausweislich Fig. 7 deutlich, dass hier eine asymmetrische Ausbildung getroffen ist.

Ausweislich der Fig. 8 weist das Kopfsegment 21 eine Vielzahl von Schraubenaufnahmen 29a, 29b, 29c, 29d, 29e, 29f auf.

Demgegenüber weist ausweislich Fig. 10 das Fußsegment 20 zwei Schraubgewindeaufnahmen 33a, 33b und jeweils vier Schraubendurchstecköffnungen, bzw. Schraubenaufnahmen 34a, 34b, 34c, 34d auf.

Ausweislich der Fig. 1a, sowie der Figuren 4 und 5 erfolgt bei diesem Ausführungsbeispiel jeweils zunächst eine Befestigung des Fußsegmentes 20 an dem entsprechenden ersten oder zweiten Kupplungsteil 14, 15 unter Zuhilfenahme der Schrauben 22a, 22b.

Sodann wird das jeweilige Kopfsegment 21 unter Zuhilfenahme der Schrauben 22c, 22d unmittelbar an dem jeweiligen Kupplungsteil 14, 15 befestigt, und zugleich unter Zuhilfenahme der Schrauben 22e, 22f direkt an dem zugehörigen Fußsegment 20 festgelegt.

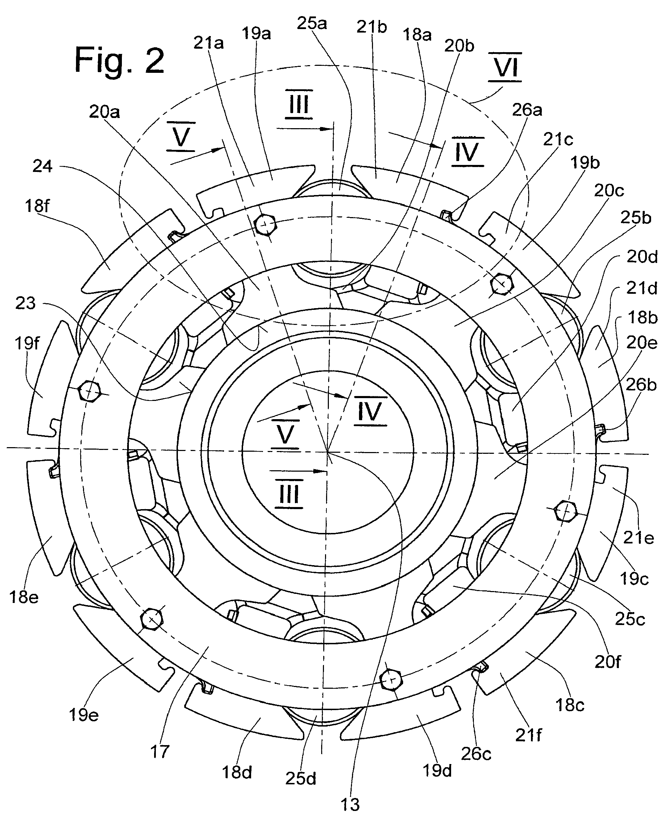

Bei Betrachtung der Darstellung der Fig. 2 ergibt sich insoweit in Umfangsrichtung eine äquidistante Anordnung von Klauen 18a, 18b, 18c usw. erster Art, und von Klauen 19a, 19b, 19c, usw. zweiter Art.

Sämtliche Klauen 19a, 19b, 19c sind jeweils identisch ausgebildet, und in gleicher Orientierung oder Ausrichtung angeordnet.

Zwischen jeweils zwei Klauen, z. B. zwischen den Klauen 19a und 18a, befindet sich ein Unterbringungsraum 32a, 32b, 32c zur Aufnahme und Unterbringung von elastischen Körpern, insbesondere von Rollenkörpern.

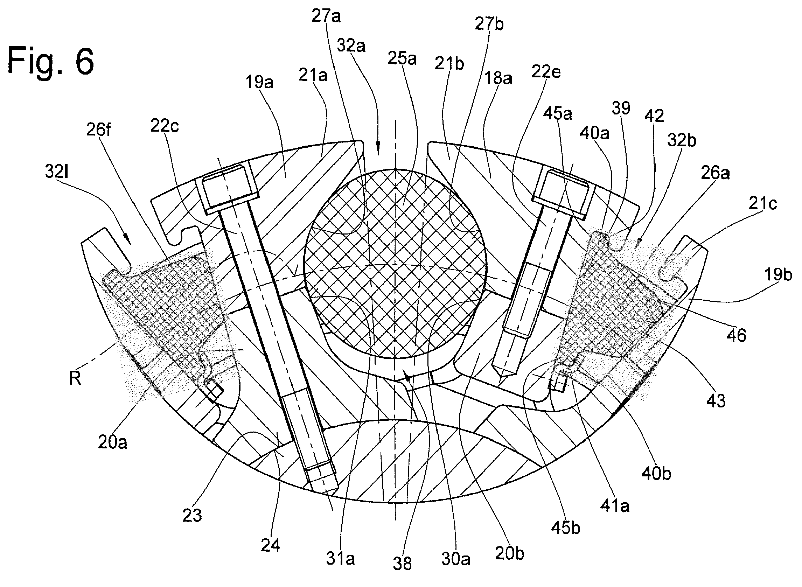

Fig. 2, besser aber noch Fig. 6, macht deutlich, dass elastische, im Wesentlichen kreiszylindrische Rollenkörper 25 erster Art und demgegenüber unterschiedlich ausgebildete elastische Körper 26 zweiter Art vorgesehen sind.

Wie sich beispielsweise aus der Fig. 3 und Fig. 6 ergibt, ist im unbelasteten Zustand der elastische Körper 25 erster Art mit einem im Wesentlichen kreiszylindrischen Querschnitt ausgestattet. Auch die zugehörige Unterbringungsraum 32a, der begrenzt ist von den entsprechenden Flankenabschnitten, die in Fig. 6 mit 27a, 27b, 30a, 31 a bezeichnet sind, im Wesentlichen kreiszylindrisch ausgebildet.

Man erkennt allerdings bei dem Ausführungsbeispiel der Fig. 6 als Bestandteil des Unterbringungsraumes 32a einen gewissen Ausweichraum 38, der bei radialer Verformung des elastischen Körpers 25a unter Last eine Verformung und ein Ausweichen von Material in den Ausweichraum 38 hinein, zulässt.

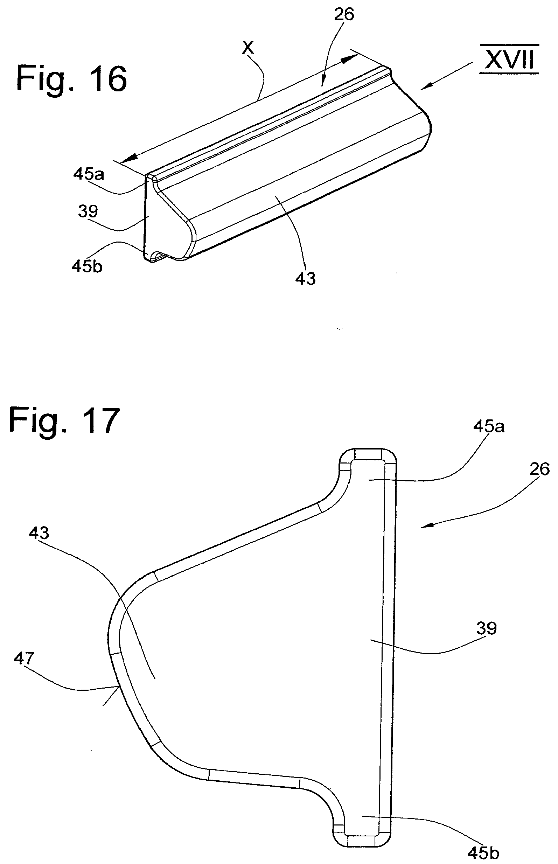

Der elastische Körper 26 zweiter Art hat demgegenüber einen anderen Querschnitt. Er weist einen Halteabschnitt 39 (Fig. 17) auf, der mit zwei Vorsprüngen 40a, 40b (Fig. 6) in Befestigungstaschen an der Klaue ruht. Die Befestigungstasche 41 a (Fig. 6) wird von einem gesonderten Element bereitgestellt, welches an dem Fußsegment 20b festgelegt sein kann.

Die Befestigungstasche 40a wird durch eine unmittelbar entsprechende Einbuchtung 42 an dem Kopfsegment 21 b bereitgestellt.

Das elastische Element 26 zweiter Art weist neben dem Halteabschnitt 39 einen Anlehnungsabschnitt oder Spannabschnitt 43 (Fig. 17) auf, mit dem es sich an der jeweils benachbarten Klaue, also z. B. bezogen auf die Fig. 6 an der Klaue 19b und deren zugehöriger Flanke 46 anlehnt.

Bei radialer Befestigung des Kopfsegmentes der Klaue 19b wird das elastische Element 26a zweiter Art unter Vorspannung gesetzt. Dies führt zu der Erzeugung einer Vorspannung der beiden Kupplungsteile 14, 15 in Umfangsrichtung.

Gemäß der vorliegenden Erfindung können die Klauen erster Art 18 und die Klauen zweiter Art 19 zur Befestigung an den unterschiedlichen Kupplungsteilen 14, 15 vorgesehen, identisch ausgebildet werden. Sie werden also von gleichen Teilen bereitgestellt, so dass die Lagerhaltung und auch der Herstellungsaufwand vereinfacht wird.

Darüber hinaus ist gemäß der Erfindung vorgesehen, dass die beiden Segmente 20, 21, aus denen eine Klaue 18, 19 besteht, nämlich das Fußsegment 20 und das Kopfsegment 21, jeweils aus unterschiedlichen Materialen gebildet sein können. Beispielsweise kann das Kopfsegment 21 aus Aluminium oder Stahl bestehen, und das Fußsegment 20 aus Stahl bestehen. Es können dabei aber auch völlig unterschiedliche Herstellungsarten gewählt werden. So kann beispielsweise das Fußsegment ein Schmiedeteil, und das Kopfsegment 21 ein z. B. abgelängtes Stranggussprofil sein.

Auch eine einfache Nachbearbeitung zur Erzielung möglichst optimal angepasster Flankenflächen 30, 31 wird erfindungsgemäß möglich.

Die Erfindung ermöglicht darüber hinaus die Bereitstellung von Gleichteilen bei Kupplungen mit unterschiedlichen Nabendurchmessern. So muss gemäß einem Aspekt der Erfindung die Montagefläche 24 des Fußteils 20 (Fig. 9) lediglich an die Außenmantelfläche 23 des ersten oder zweiten Kupplungsteils 14, 15 angepasst werden. Bei unterschiedlich großen Außendurchmessern des ersten Kupplungsteils 14 oder des zweiten Kupplungsteils 15, was die unterschiedlichen Außenmantelflächenwölbungen führt, kann insoweit durch eine bloße Anpassung der Montagefläche 24, ein ansonsten identisches Fußsegment 20 verwendet werden. Da eine Anpassung der Montagefläche 24 zur Änderung der Konkavität, also der Wölbungsart oder Wölbungsgröße, durch eine einfache Nachbearbeitung eines schon vorhandenen Fußsegmentes 20 möglich wird, kann gegenüber dem Stand der Technik ein erheblicher Bearbeitungsaufwand eingespart werden.

Anhand der Figuren 16 und 17 soll nun noch der elastische Körper zweiter Art erläutert werden, der insgesamt mit 26 in den Figuren 16 und 17 bezeichnet ist.

Der elastische Körper 26 zweiter Art weist eine axiale Länge X (Fig. 16) auf, die der axialen Länge A des Kopfsegmentes 21 im Wesentlichen entspricht. Der Vollständigkeit halber sei angemerkt, dass auch die axiale Länge der kreiszylindrisch ausgebildeten Rollenkörper, den elastischen Körpern 25 erster Art, ebenfalls der Länge X der elastischen Körper 26 zweiter Art entspricht.

Ausweislich der Fig. 17 weist der elastische Körper 26 zweiter Art einen im Wesentlichen abgestumpft dreieckförmigen Querschnitt auf. Von einer Art Basis, die als Halteabschnitt 39 bezeichnet wird, erstreckt sich ein Spannabschnitt 43, sich in seiner Breite verjüngt, weg. An dem Halteabschnitt 39 sind zwei Befestigungsabschnitte 45a, 45b angeordnet, die auch als Vorsprünge 40 bezeichnet werden. Diese Vorsprünge sind in den entsprechenden Befestigungstaschen 41 a, 41 b an dem Kopfsegment 21 der entsprechenden Klaue, bzw. an einer entsprechenden Halterung am Fußsegment 20 eingesetzt.

In montiertem Zustand, wie beispielsweise in Fig. 6 dargestellt ist, wird die entsprechende Flanke 28 (Fig. 7) des Kopfsegmentes 21 c der Fig. 6 zu einer Vorspannfläche 46. Mit zunehmender radialen Annäherung des Kopfsegmentes 21 an die Drehachse 13, d. h. während der Montage des Kopfsegmentes 21 an der Kupplung 10, kommt die Vorspannfläche 46 mit der Stirnfläche 47 (Fig. 17) des elastischen Körpers 26 zweiter Art in Kontakt, und komprimiert den elastischen Körper 26 zweiter Art in Umfangsrichtung.

Lediglich der Vollständigkeit halber sei angemerkt, dass die in Fig. 6 mit 18a bezeichnete Klaue, insbesondere deren Kopfsegment 21 b, zunächst montiert werden kann, ggf. mit bereits darin eingesetztem elastischen Körper 26a zweiter Art.

Erst nach erfolgter Befestigung kann das Kopfsegment der benachbarten Klaue 19b, das in Fig. 6 mit 21c bezeichnet ist, radial montiert werden, und im Zuge der fortwährenden radialen Annäherung an die Drehachse 13 für eine Komprimierung des elastischen Körpers 26a in Umfangsrichtung sorgen.

In Folge der Komprimierung sämtlicher elastischer Körper 26a, 26b, 26c, 26d, 26e zweiter Art werden das erste Kupplungsteil 14 und das zweite Kupplungsteil 15 - im lastfreien Zustand - gegeneinander vorgespannt. Dies sorgt auch dafür, dass die elastischen Körper 25a, 25b, 25c, 25d, 25e, usw. erster Art, zumindest geringfügig, unter Vorspannung gesetzt werden.

Bei plötzlichen Lastwechseln, wie sie im Betrieb auftreten können, insbesondere bei Anwendung der Kupplung 10 im Bereich von Erzmühlen, Steinmühlen, Stahlmühlen oder dergleichen, also bei Anwendungen, bei denen häufig abrupte Rückstöße auftreten, kann eine Lösung der Flächen der Klauen, z. B. der Flanken 27a, 27b gemäß Fig. 6, von dem in Fig. 6 mit 25a bezeichneten elastischen Körper 25a erster Art vermieden werden.

Jeweils zwei, einander in Umfangsrichtung benachbarte Unterbringungsräume 32a, 32b der Kupplung 10, sind unterschiedlich ausgebildet. Wie sich insbesondere aus Fig. 6 ergibt, sind Unterbringungsräume 32a, 32c, 32e, etc. erster Art vorgesehen, die einen im Wesentlichen kreisförmigen Querschnitt aufweisen, und sich insoweit an den kreiszylindrischen Querschnitt der elastischen Körper 25 erster Art anpassen.

Die Unterbringungsräume zweiter Art 32b, 32d, 32f sind im Wesentlichen dreieckförmig ausgebildet, und insoweit an die Querschnittskontur der elastischen Körper 26 zweiter Art angenähert.

Wie sich insbesondere aus Fig. 6 ergibt, liegen die Mittelpunkte der elastischen Körper 25 erster Art und der elastischen Körper 26 zweiter Art im Wesentlichen auf einem gleichen Radius R um die Drehachse 13.

Gemäß einer vorteilhaften Ausgestaltung der Erfindung ist das Fußsegment 20 als Schmiedeteil ausgebildet, wobei die Montagefläche 24, und ggf. auch eine oder mehrere Flanken 30, 31, durch ein besonderes Schmiedeverfahren generiert werden können. Hierdurch kann ein Fußsegment 20 der Klaue 18, 19 bereitgestellt werden, ohne dass eine Nachbearbeitung erforderlich ist.

Das Kopfsegment 21 ist aus einem anderen Material, vorzugsweise aus Aluminium, und kann z. B. von einem Stranggussprofil bereitgestellt sein.

## Patentansprüche

1. Elastische Klauenkupplung (10) zur Übertragung von Drehmomenten von einem Antrieb (12) zu einem Abtrieb (13), mit einem ersten, dem Antrieb zugeordneten Kupplungsteil (14), und einem zweiten, dem Abtrieb zugeordneten Kupplungsteil (15), die beide um eine gemeinsame Drehachse (13) rotieren, wobei an beiden Kupplungsteilen radial montierbare Klauen (18, 19) angeordnet sind, die sich von dem jeweiligen Kupplungsteil radial nach außen und in Axialrichtung im Sinne einer Erzielung einer axialen Überdeckung mit dem jeweils anderen Kupplungsteil erstrecken, wobei jeweils zwei in Umfangsrichtung um die Drehachse benachbart angeordnete Klauen (19a, 18a) zwischen sich einen Unterbringungsraum (32a) für einen elastischen Körper (25, 26) ausbilden, **dadurch gekennzeichnet, dass** die Klauen beider Kupplungsteile identisch ausgebildet sind.

2. Elastische Klauenkupplung nach dem Oberbegriff des Anspruches 1, **dadurch gekennzeichnet, dass** die Klauen (18, 19) jeweils in mindestens zwei Klauensegmente (20, 21) unterteilt sind, wobei Klauen beider Kupplungsteile wenigstens ein identisch ausgebildetes Klauensegment (20, 21) aufweisen.

3. Elastische Klauenkupplung nach Anspruch 1 oder 2, **dadurch gekennzeichnet, dass** eine Klaue (18, 19) wenigstens zwei Klauensegmente (20, 21) umfasst, wobei ein Kopfsegment (21) und ein Fußsegment (20), insbesondere in radialer Teilung, vorgesehen sind.

4. Elastische Klauenkupplung nach einem der vorangegangenen Ansprüche, **dadurch gekennzeichnet, dass** das Kopfsegment (21) und das Fußsegment (20) jeweils einen Abschnitt einer Anlagefläche (27, 28, 30, 31) für den elastischen Körper (25, 26) bereitstellen.

5. Elastische Klauenkupplung nach Anspruch 3 oder 4, **dadurch gekennzeichnet, dass** Fußsegment (20) und Kopfsegment (21) aneinander radial montierbar ausgebildet sind.

6. Elastische Klauenkupplung nach einem der Ansprüche 3 bis 5, **dadurch gekennzeichnet, dass** Fußsegment (20) und Kopfsegment (21) aus unterschiedlichen Materialien bestehen.

7. Elastische Klauenkupplung nach einem der Ansprüche 3 bis 6, **dadurch gekennzeichnet, dass** das Kopfsegment (21) bezogen auf eine Mittellängsebene (N) asymmetrisch ausgebildet ist.

8. Elastische Klauenkupplung nach Anspruch 7, **dadurch gekennzeichnet, dass** in Umfangsrichtung eine alternierende Ausrichtung der Kopfsegmente (21 a, 21 b) getroffen ist.

9. Elastische Klauenkupplung nach einem der Ansprüche 3 bis 8, **dadurch gekennzeichnet, dass** das Fußsegment (20) eine konkave, zylindrisch gewölbte Montagefläche (24) zur Kontaktierung einer zylindrisch ausgebildeten Mantelfläche (23) des Kupplungsteils (14, 15) aufweist.

10. Elastische Klauenkupplung nach einem der vorangegangenen Ansprüche, **dadurch gekennzeichnet, dass** beide Kupplungsteile (14, 15) jeweils von einem Ringkörper bereitgestellt sind, der radiale Schraubaufnahmen (35a, 35b, 35c, 35d, 35e) zur Klauenbefestigung aufweist.

11. Elastische Klauenkupplung nach Anspruch 10, **dadurch gekennzeichnet, dass** wenigstens ein Kupplungsteil (14) zusätzlich axiale Schraubaufnahmen (35a, 35b, 35c, 35d, 35e) zur Montage eines Befestigungsflansches (16) aufweist, wobei eine Radialabmessung des Befestigungsflansches eine Radialabmessung des Ringkörpers übersteigt.

12. Gruppe von Fußsegmenten (20) von Klauen (18, 19) für elastische Klauenkupplungen (10) nach Anspruch 2, **dadurch gekennzeichnet, dass** ein erstes Fußsegment (20a) eine konkave, entlang einem ersten Radius zylindrisch gewölbte Montagefläche (24a) zur Kontaktierung einer zylindrisch ausgebildeten Mantelfläche des Kupplungsteils aufweist, und dass ein zweites Fußsegment (20b) zu dem ersten Fußsegment bis auf die Ausgestaltung der Montagefläche identisch ausgebildet ist, und eine konkave, entlang einem zweiten, von dem ersten Radius unterschiedlichen Radius zylindrisch gewölbte Montagefläche zur Kontaktierung einer entlang dem zweiten Radius zylindrisch ausgebildeten Mantelfläche des Kupplungsteils aufweist.
